# EUROPÄISCHE PATENTSCHRIFT

(11) **EP 1 474 716 B1**
(45) Veröffentlichungstag und Bekanntmachung des Hinweises auf die Patenterteilung: **31.08.2005**
(21) Anmeldenummer: 03706111.6
(22) Anmeldetag: 13.02.2003
(51) Int. Cl.: G02B 27/01

(54) **HALTER FÜR AM KOPF ZU TRAGENDE GERÄTE**
SUPPORT FOR APPLIANCES TO BE WORN ON THE HEAD
SUPPORT POUR APPAREILS A PORTER SUR LA TETE

(30) Priorität: 14.02.2002 AT 2362002
(43) Veröffentlichungstag der Anmeldung: 10.11.2004
(73) Patentinhaber: Life Optics GmbH, 1160 Wien (AT)
(72) Erfinder: LEHRL, Maria, A-5310 Mondsee (AT); PESENDORFER, Wolfgang, A-1180 Wien (AT)
(74) Vertreter: Beer, Manfred
(86) Internationale Anmeldenummer: PCT/AT2003/000045
(87) Internationale Veröffentlichungsnummer: WO 2003/069214

(56) Entgegenhaltungen:
- EP-A- 0 675 382
- EP-A- 0 942 307
- WO-A-00/55673
- WO-A-01/38919
- WO-A-92/03756
- WO-A-96/09566
- US-A- 3 090 045
- US-A- 5 365 607
- US-A- 5 913 412
- "DAS ENDE EINER ARA HEAD-UP-DISPLAY UND SPRACHVERARBEITUNG ERSETZEN TASTATUR UND MONITOR" ELEKTRONIK, FRANZIS VERLAG GMBH. MUNCHEN, DE, Bd. 39, Nr. 11, 25. Mai 1990 (1990-05-25), Seiten 30-31, XP000125860 ISSN: 0013-5658

## Beschreibung

Die Erfindung betrifft einen Halter für am Kopf eines Benutzers zu tragende Geräte.

Derartige Halter sind im Stand der Technik bekannt, in welchem Zusammenhang beispielsweise auf die Druckschriten WO 01/003819 A, WO 00/55673 A und EP 0 675 382 A verwiesen werden kann.

Die bekannten Halter, können beispielsweise von Chirurgen beim Operieren für das Tragen von Sehhilfen verwendet werden. Die bekannten Halter sind nicht nur vergleichsweise aufwendig konstruiert, sondern können auch nicht einfach an die Kopfform und -größe eines Benutzers angepasst werden. Auch ist das Anlegen der bekannten Halter mühsam.

Die bekannten Halter für am Kopf zu tragende Geräte besitzen in der Regel einen den Kopf umfassenden Ring, der bei Gebrauch am Kopf des Benützers ähnlich einem Hutband angeordnet ist, und ein Scheitelband, das von der Stirn zum Hinterkopf des Benützers verläuft.

Aus der WO 01/003819 A ist es bekannt, bei solchen Haltern das Gewicht des am Halter befestigten Gerätes, z.B. einer Sehhilfe für Chirurgen, durch im Bereich des Hinterkopfes angebrachte Gegengewichte möglichst auszugleichen, um den Tragekomfort zu erhöhen.

Der Erfindung liegt die Aufgabe zu Grunde, einen Halter der eingangs genannten Gattung zur Verfügung zu stellen, der einfach im Aufbau ist, einen hohen Tragekomfort besitzt.

Gelöst wird diese Aufgabe erfindungsgemäß mit einem Halter, der die Merkmale des Anspruches 1 aufweist.

Bevorzugte und vorteilhafte Ausgestaltungen des erfindungsgemäßen Halters sind Gegenstand der Unteransprüche.

Der erfindungsgemäße Halter besteht in seinem grundsätzlichen Aufbau aus einem sich vom Vorderkopf (Stirne) zum Hinterkopf eines Benützers erstreckenden Bügel, der über mehrere Stützelemente am Kopf abgestützt ist. Wegen der an einem Bügel angeordneten Stützelemente kann der erfindungsgemäße Halter einfach an die Kopfform eins Benutzers dadurch angepasst werden, dass Stützelemente hinsichtlich ihrer Lage und/oder Ausrichtung verändert werden.

Das Anpassen des erfindungsgemäßen Halters an verschiedene Kopfformen und/oder -größen gestaltet sich bei dem erfindungsgemäßen Halter besonders einfach, wenn Stützelemente zu Gruppen zusammengefasst am Bügel des Halters angeordnet sind. In einer Ausführungsform des Halters der Erfindung ist wenigstens eine Gruppe von Stützelementen am Bügel verstellbar befestigt. So kann der Halter an die Kopfgröße rasch angepasst werden und das Aufsetzen/Abnehmen des Halters wird erleichtert.

Bevorzugt ist es im Rahmen der Erfindung, wenn die Stützelemente nach der Art von Kissen ausgebildet sind.

Die Stützelemente können am Bügel nach mehreren Richtungen verschwenkbar gelagert sein, so dass sich ihre Ausrichtung selbsttätig der Ausrichtung des Kopfes des Benutzers in den Bereichen, in denen Stützelemente anliegen, anpassen kann. Um dennoch einen sicheren Sitz des Halters zu gewährleisten, kann vorgesehen sein, dass die Stützelemente nur begrenzt, also innerhalb des begrenzten Bereiches, frei verschwenkbar sind.

In einer praktischen Ausführungsform kann vorgesehen sein, dass Stützelemente, gegebenenfalls zu Gruppen aus mehreren Stützelementen zusammengefasst, an dem im Bereich der Stirn des Benützers liegenden Ende des Bügels, an dem im Bereich des Hinterkopfes liegenden Ende des Bügels und im mittleren Abschnitt des Bügels angeordnet sind.

Dabei kann vorgesehen sein, dass die Stützelemente am vorderen Ende des Bügels und am hinteren Ende des Bügels, jeweils in einer, sich vorzugsweise quer zum Bügel erstreckenden, Reihe angeordnet sind, wogegen die Stützelemente im mittleren Abschnitt des Bügels angeordnet, also die Stützelemente, die im Bereich des Scheitels des Kopfes eines Benützers anliegen, in wenigstens zwei, auf beiden Seiten des Bügels angeordneten Reihen liegen, die vorzugsweise im wesentlichen parallel zum Bügel ausgerichtet sind.

Die Beweglichkeit der Stützelemente kann dadurch erreicht werden, dass diese am Bügel schwenkbar, beispielsweise an Hebeln, gelagert sind. Dabei kann vorgesehen sein, dass die Hebel, an welchen die Stützelemente angeordnet sind, ihrerseits schwenkbar von Grundhebeln, die schwenkbar am Bügel des Halters gelagert sind, getragen werden.

An dem vorderen Ende des Bügels, also dem Ende, das im Bereich der Stirn des Benützers liegt, kann eine Anschlussstelle für ein am Halter zu befestigendes Gerät vorgesehen sein. Solche Geräte können, von Chirurgen oder Feinmechanikern benützte Sehhilfen, beispielsweise mit Zoom und Autofokus, z.B. Sehhilfen der in der WO 96/09566 A und/oder WO 01/03819 A beschriebenen Konstruktion sein. An dem erfindungsgemäßen Halter können aber auch andere am Kopf zu tragende Geräte, wie Displays, in denen Daten, Montagepläne u.dgl. angezeigt werden, Nachtsichtgeräte, Scheinwerfer, Leuchten, Schutzvorrichtungen (Schweißschutzschilde), Schutzschilde u.ä. befestigt werden.

Bei dem erfindungsgemäßen Halter können die Stützelemente unterschiedlich ausgebildet und/oder aus unterschiedlichen Werkstoffen bestehen, um sie an den jeweiligen Anlageort am Kopf des Benützers anzupassen. So kann die Art und Ausgestaltung der Stützelemente darauf Rücksicht nehmen, ob sie an der Haut oder auf Haaren des Benützers anliegen.

In einer Ausführungsform der Erfindung kann vorgesehen sein, dass die Stützelemente mit Unterdruck beaufschlagbare Kissen aufweisen, um den Sitz des erfindungsgemäßen Halters am Kopf eines Benützers zu verbessern.

Um einen wenigstens teilweisen Gewichtsausgleich zwischen einem am vorderen, im Bereich der Stirn des Benützers liegenden Ende des Bügels des erfindungsgemäßen Halters befestigten Gerät mit dem übrigen Teil des erfindungsgemäßen Halters zu erzielen, kann vorgesehen sein, dass gewichtsschwere Bauteile, wie Elektronikbauteile u.dgl., sowie Anschluss-stellen für Übertragungselemente, z.B. Steckdosen oder Infrarotfenster ("infrarot-ports"), für den Anschluss von Versorgungs- und/oder Daten- und/oder Steuerleitungen im Bereich des hinteren Endes des Bügels vorgesehen sind. Solche gewichtsschwere Bauteile können beispielsweise auch im Bereich des mittleren Abschnittes des Bügels vorgesehen sein.

Um den erfindungsgemäßen Halter einfach an die Kopfgröße anpassen zu können, kann vorgesehen sein, dass die im Bereich des hinteren Endes am Hinterkopf eines Benützers anliegenden Stützelemente, gegebenenfalls über Hebel/Grundhebel, an einem am hinteren Ende des Bügels verschiebbaren Träger, z.B. einem Schlitten, befestigt sind. Zum Verstellen dieses Schlittens kann beispielsweise eine mit einem Betätigungsknopf ausgerüstete Stellschraube vorgesehen sein.

Auch die im mittleren Abschnitt des Bügels angeordneten Stützelemente können entlang des Bügels verstellbar an einem Träger, z.B. einem Schlitten, montiert sein, um sie in eine für die Anlage am Scheitel des Kopfes des Benützers des Halters günstige Lage verschieben zu können.

Der Anschlussstelle für das am erfindungsgemäßen Halter zu befestigende Gerät, die vorzugsweise im Bereich des vorderen Endes des Bügels liegt, können Schwenkeinrichtungen zugeordnet sein. Mit einer solchen Schwenkeinrichtung kann das Gerät aus seiner Gebrauchslage in eine Nicht-Gebrauchslage verschwenkt werden. Dies ist beispielsweise bei optischen Sehhilfen für Chirurgen von Bedeutung ist, wenn diese sich beispielsweise ohne Benützen der Sehhilfe einen Überblick über das Operationsgebiet verschaffen wollen und hiezu die Sehhilfe wegschwenken müssen. Dabei ist vorgesehen, dass beim Zurückschwenken des Gerätes in seine Gebrauchslage selbsttätig und ohne weiteres Zutun eine Grundstellung jedenfalls wieder erreicht wird. Das Verschwenken, nämlich Ausschwenken und/oder das Einschwenken, kann von Hand aus oder mit Hilfe eines der Schwenkeinrichtung zugeordneten Antriebes erfolgen.

Der Bügel des Halters kann hohl ausgebildet sein, um in ihm Leitungen für die Energieversorgung, die Steuerung und/oder eine Datenübertragung vom oder zum am Bügel befestigten Gerät aufzunehmen. Zusätzlich kann im Bügel des Halters, insbesondere im Scheitelbereich, eine nach oben offene Rinne für die Aufnahme von Leitungen, z.B. von Kaltlichtleitungen, vorgesehen sein.

Weitere Einzelheiten, Merkmale und Vorteile des erfindungsgemäßen Halters ergeben sich aus der nachstehenden Beschreibung eines Ausführungsbeispiels anhand der Zeichnungen.

Es zeigt:
Fig. 1 einen erfindungsgemäßen Halter ohne an ihm befestigtes Gerät in Seitenansicht,
Fig. 2 von schräg vorne und oben gesehen den Halter von Fig. 1,
Fig. 3 von oben gesehen den Halter von Fig. 1,
Fig. 4 einen Schnitt längs der Linie C-C in Fig. 1,
Fig. 5 einen Schnitt längs der Linie E-E in Fig. 1,
Fig. 6 in Seitenansicht einen am Kopf eines Benützers aufgesetzten Halter mit an ihm befestigten Gerät in Form einer optischen Sehhilfe und
Fig. 7 in Schrägansicht von schräg vorne gesehen einen erfindungsgemäßen Halter mit an ihm befestigter optischer Sehhilfe.

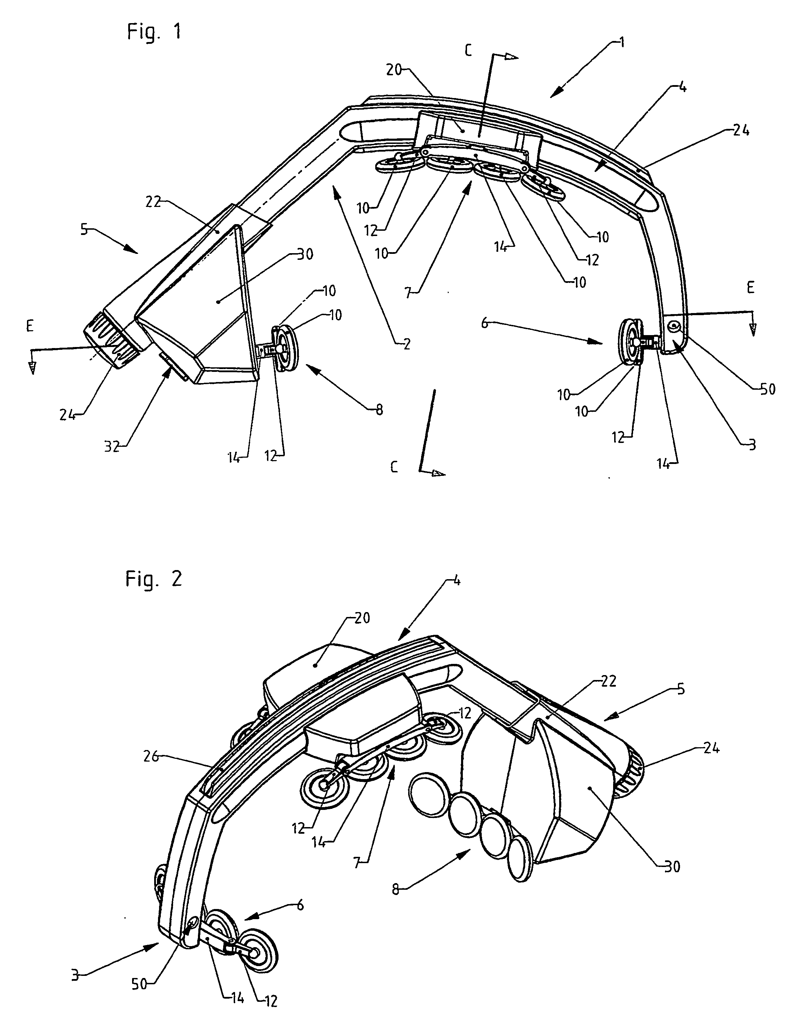

Ausweislich der Fig. 1 und 2 besitzt der erfindungsgemäße Halter 1 einen Bügel 2 mit einem vorderen Ende 3, das im Bereich der Stirn eines Benützers anzuordnen ist, mit einem mittleren Abschnitt 4, der im Bereich des Scheitels eines Benützers angeordnet wird, und mit einem hinteren Ende 5, das, wenn der erfindungsgemäße Halter 1 am Kopf eines Benützers angeordnet ist, im Bereich seines Hinterkopfes angeordnet ist.

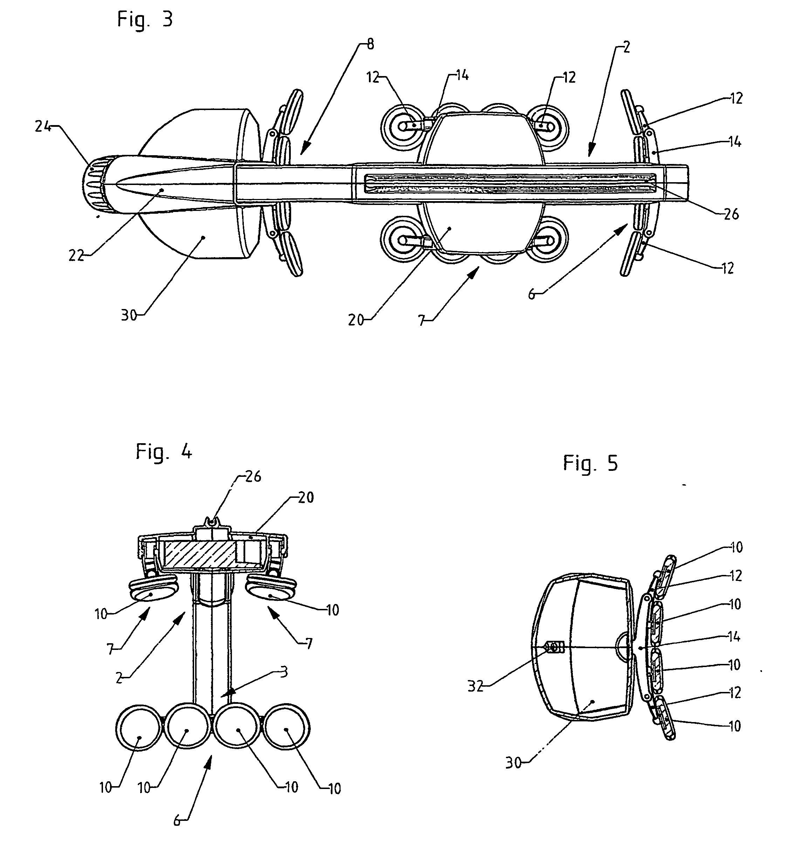

Im Bereich des vorderen Endes 3, im Bereich des mittleren Abschnittes 4 und im Bereich des hinteren Endes 5 des Bügels 2 des erfindungsgemäßen Halters 1 sind jeweils Gruppen 6, 7 und 8 aus mehreren Stützelementen 10 vorgesehen. Die im Bereich des vorderen Endes 3 des Bügels 2 vorgesehene Gruppe 6 besitzt im Ausführungsbeispiel vier Stützelemente 10, die nach Art runder Kissen ausgebildet sind. Im Bereich des mittleren Abschnittes 4 des Bügels 2 besitzt die Gruppe 7 zu beiden Seiten des Bügels 2 (Fig. 2 und 3) angeordnete Stützelemente 10 in Form runder Kissen. Die im Bereich des hinteren Endes 5 des Bügels 2 angeordnete Gruppe 8, hat vier Stützelemente 10 in Form runder Kissen.

Die Stützelemente 10 der Gruppe 6 im Bereich des vorderen Endes 3 und die der Gruppe 8 im Bereich des hinteren Endes 5 des Bügels 2 sind jeweils im wesentlichen in einer Reihe angeordnet, die quer zur Längserstreckung (Symmetrieebene) des Bügels 2 ausgerichtet ist. Die Stützelemente 10 der Gruppe 7, die im mittleren Abschnitt des Bügels 2 angeordnet ist, sind in zwei auf beiden Seiten des Bügels 2 und im wesentlichen parallel zu dessen mittleren Abschnitt 4 ausgerichteten Reihen angeordnet (Fig. 3).

Damit sich die im Ausführungsbeispiel als runde Kissen ausgebildeten Stützelemente 10 der Form und/oder Lage des Bereiches des Kopfes des Benützers, an dem sie anliegen, gut anpassen können, sind die Stützelemente 10 am Bügel 2 schwenkbar angebracht.

Im Ausführungsbeispiel sind die Stützelemente 10 beispielsweise über Kugelschwenklager verschwenkbar an Hebeln 12 befestigt. Jeder dieser Hebel 12, der an seinen Enden je ein kissenförmiges Stützelement 10 trägt, ist im Bereich seiner Mitte mit einem weiteren Hebel, dem Grundhebel 14, gelenkig verbunden. Die Grundhebel 14 ihrerseits sind am Bügel 2 des Halters 1 schwenkbar gelagert. Die Hebel 12 können an den Grundhebeln 14 um eine Achse oder einen um einen Schwenkpunkt (Kugelgelenk) verschwenkbar sein. Die Grundhebel 14 können am Bügel 2 um eine Achse oder um einen Verschwenkpunkt nach Art eines Kugelgelenkes schwenkbar sein. Auch Kombination dieser beiden Schwenkmöglichkeiten (Schwenken um eine Achse einerseits und Schwenken um einen Schwenkpunkt (Kugelgelenk) anderseits) sind möglich. Beispielsweise können die Stützelemente 10 an den Hebeln 12 und die Grundhebel 14 am Bügel 2 allseitig schwenkbar und die Hebel 12 an den Grundhebeln 14 um Achsen, die bevorzugt senkrecht zur Symmetrieebene des Bügels 2 ausgerichtet sind, schwenkbar gelagert sein.

Die Gruppe 7 von Stützelementen 10 im mittleren Abschnitt 4 des Bügels 2 ist an einem Schlitten 20 montiert, der in Längsrichtung des mittleren Abschnittes 4 verschiebbar und in der gewünschten Stellung festlegbar ist.

Die Gruppe 8 von Stützelementen 10 im Bereich des hinteren Endes 5 des Bügels 2 ist an einem Schlitten 22 montiert, der mit Hilfe einer mit einem Betätigungsknopf 24 ausgerüsteten Stellschraube entlang des hinteren, im gezeigten Ausführungsbeispiel geraden Endes 5 des Bügels 2 verschiebbar ist.

Die Verstellbarkeit der Stützelemente 10 im mittleren, im gezeigten Ausführungsbeispiel flach gebogen ausgebildeten Abschnitt 4 des Bügels 2 dient primär dazu, den erfindungsgemäßen Halter 1 an die Form des Kopfes eines Benützers anzupassen.

Die Verstellbarkeit der Stützelemente 10 im Bereich des hinteren Endes 5 des Bügels 2, also der Stützelemente 10, die am Hinterkopf eines Benützers anliegen, wenn der Halter 1 benützt wird, dient in erster Linie zum Anlegen des Halters 1. Beispielsweise wird der Halter 1 mit nach hinten verschobener Gruppe 8 von Stützelementen 10 aufgesetzt - die Stützelemente 10 der Gruppen 6 und 7 liegen am Kopf des Benützers an - und dann werden die Stützelemente 10 durch Bewegen des Schlittens 22 in Anlage an den Hinterkopf gebracht. So wird durch Anliegen der Stützelemente 10 der Gruppe 6 im Bereich der Stirn, der Gruppe 8 im Bereich des Hinterkopfes sowie der Gruppe 7 im Bereich des Scheitels ein sicherer Sitz des Halters 1 am Kopf eines Benützers erreicht.

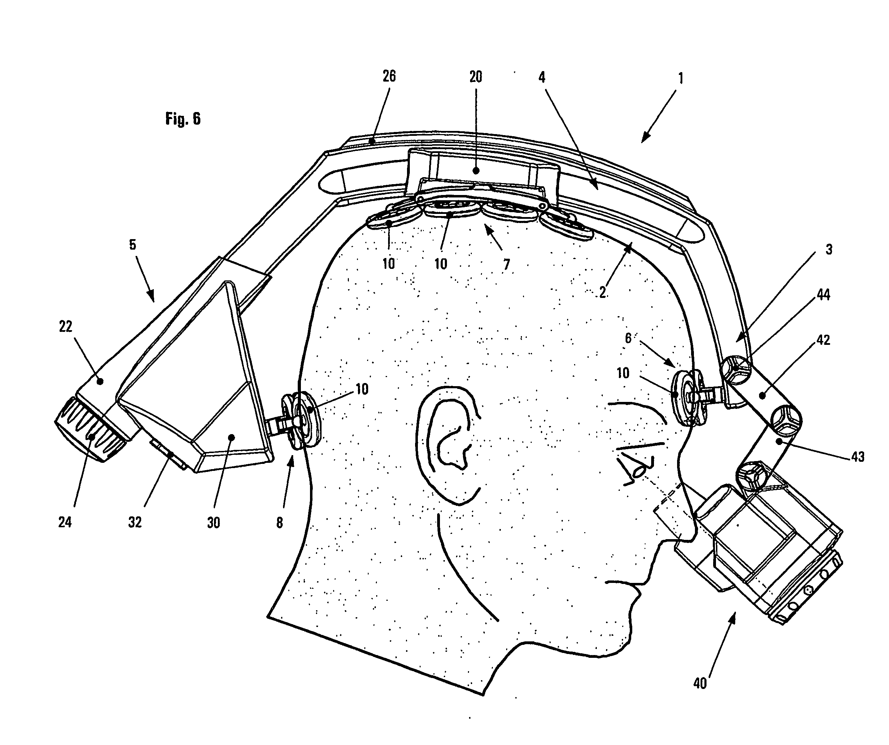

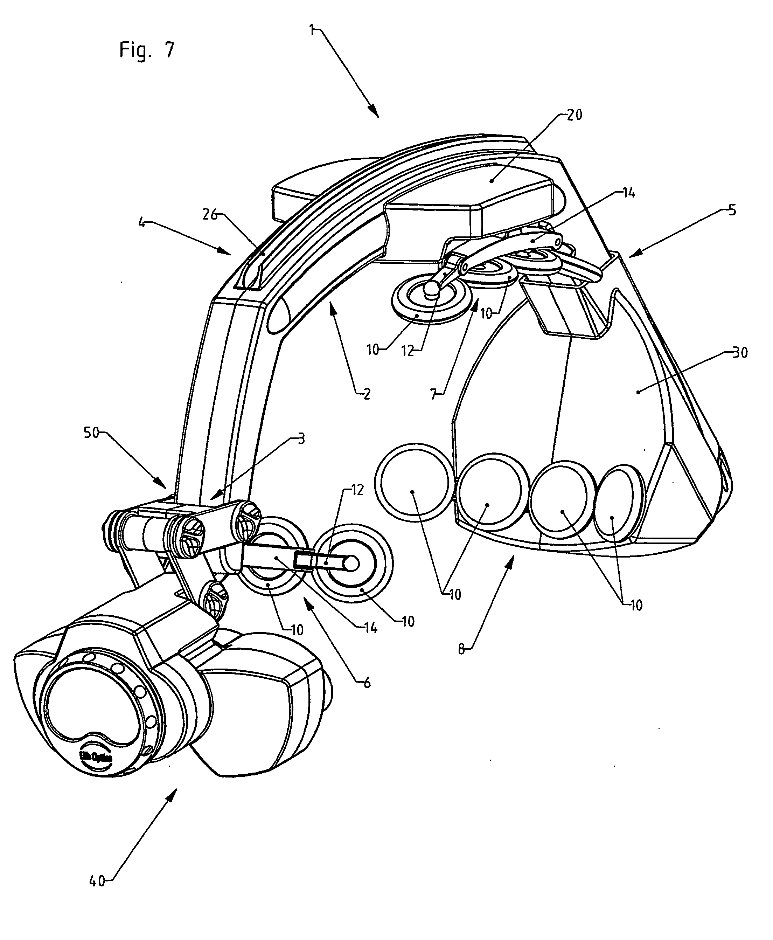

Der Schlitten 22 am hinteren, geraden Ende 5 des Bügels 2, an dem die hinteren Stützelemente 10 angeordnet sind, kann ein Gehäuse 30 zur Aufnahme von Elektronikbauteilen und/oder Gewichten aufweisen, damit ein Ausgleich des Gewichtes zwischen einem am vorderen Ende 3 des Bügels 2 befestigten Gerät 40 (Fig. 6 und 7) erreicht werden kann, also der Halter 1 bei Unterstützung im Bereich der Gruppe 7 von Stützelementen 10 im wesentlichen im Gleichgewicht ist.

In der Wand des Gehäuses 30 am Schlitten 22 und/oder am Bügel 2 kann wenigstens eine Anschlussstelle für Übertragungselemente, z.B. Steckdose 32 oder Infrarotfenster ("infrarot-ports"), für den Anschluss von Energieversorgungs-, Daten- und/oder Steuerleitungen vorgesehen sein.

Der Bügel 2 ist bevorzugt hohl ausgebildet, so dass Leitungen von dem und zu dem an seinem vorderen Ende befestigten Gerät 40 in seinem Inneren aufgenommen sein können.

Zusätzlich kann, insbesondere im Scheitelbereich, an der Außenseite des Bügels eine Rille 26 zur Aufnahme wenigstens einer Leitung vorgesehen sein (Fig. 2 und 4). Dabei kann es sich beispielsweise um eine Leitung zu einer, insbesondere am vorderen Ende der Rille 26 angeordneten, am Bügel 2 befestigten Kaltlichtquelle handeln. Diese Kaltlichtquelle beleuchtet nach Art eines kopfgetragenen Scheinwerfers das Gesichtsfeld und folgt dabei den Bewegungen des Kopfes des Benützers des erfindungsgemäßen Halters 1.

An dem im Ausführungsbeispiel vorderen Ende 3 des Bügels 2, das etwa im Bereich der Stirn eines Benützers des erfindungsgemäßen Halters 1 angeordnet ist (Fig. 6), ist eine Anschlussstelle 50 für ein Gerät 40, das über den erfindungsgemäßen Halter 1 am Kopf des Benützers getragen werden soll, vorgesehen.

Im gezeigten Ausführungsbeispiel ist in den Fig. 6 und 7 gezeigt, dass eine optische Sehhilfe 40, wie sie beispielsweise von Chirurgen beim Operieren verwendet wird, an dem erfindungsgemäßen Halter 1 befestigt werden kann.

Hiezu ist an der optischen Sehhilfe 40 ein Hebelsystem 42,43 vorgesehen, das kniegelenkartig ausgebildet ist, und mit seinem freien Ende 44 am vorderen Ende 3 des Bügels 2 des Halters 1 befestigt wird. Dabei ist vorgesehen, dass an der Anschlussstelle 50 für das am Halter 1 zu befestigende Gerät 40 ein Schwenkantrieb vorgesehen ist, der es erlaubt, das Gerät 40 aus der beispielsweise in Fig. 6 gezeigten Gebrauchslage nach oben in eine Bereitschaftslage zu verschwenken. Der Schwenkantrieb der Anschlussstelle 50 im Bereich des vorderen Endes 3 des Bügels 2 ist so ausgebildet, dass beim Zurückschwenken des Gerätes 40 in die in Fig. 6 und 7 gezeigte Gebrauchslage stets wieder dieselbe (gegebenenfalls vorher eingestellte) Ausgangsstellung erreicht wird. Das Verschwenken kann von Hand aus oder mit Hilfe des (motorisch betätigbaren) Schwenkantriebes erfolgen.

Diese Ausführungsform der Anschlussstelle 50 erlaubt es beispielsweise einem Chirurgen, beim Operieren durch Hochschwenken der Sehhilfe 40 mit Hilfe des Schwenkantriebes der Anschlussstelle 50 (ausgelöst beispielsweise durch einen Fußschalter) das gesamte Operationsfeld überblicksmäßig zu betrachten und nach dem Zurückschwenken der Sehhilfe 40 in die Gebrauchslage (Fig. 6 und 7) mit dem Operieren fortzufahren. Vorteilhaft ist es, wenn die optische Sehhilfe 40 nach dem Zurückschwenken genau die Gebrauchsstellung wieder einnimmt, die sie vorher hatte. Die Gebrauchslage kann durch Einstellen des Hebelsystems 42,43, also der Winkel, welche die beiden Teile des Hebelsystems 42,43 mit der Sehhilfe 40 einerseits und dem vorderen Ende 3 des Bügels 2 andererseits und zueinander einnehmen, erfolgen.

Zusammenfassend kann ein bevorzugtes Ausführungsbeispiel der Erfindung wie folgt dargestellt werden:

Ein Halter 1 für am Kopf zu tragende Geräte 40 besitzt einen im wesentlichen bügelförmigen Grundkörper 2 und im Bereich seines vorderen Endes 3 Stützelemente 10, die an der Stirn eines Benützers anliegen, in einem weiteren, beispielsweise in seinem mittleren Abschnitt 4 Stützelemente 10, die im Bereich des Scheitels am Kopf eines Benützers anliegen, und im Bereich seines hinteren Endes 5 am Bügel 2 angeordnete Stützelemente 10, die am Hinterkopf eines Benützers anliegen. Alle Stützelemente 10 können zum Bügel 2 verstellbar sein. An einem, insbesondere dem vorderen, Ende 3 des Bügels 2 kann ein Gerät 40 befestigt werden. Ein solches Gerät 40 kann eine Sehhilfe od.dgl. sein. Am anderen, insbesondere dem hinteren, Ende 5 des Bügels 2 sind als Gewichtsausgleich elektronische Bauteile und/oder ein Gegengewicht, vorzugsweise in einem mit einem Schlitten 22 für die Verstellung der am Hinterkopf anliegenden Stützelemente 10 verbundenen Gehäuse 30, angeordnet.

## Patentansprüche

1. Halter (1) für am Kopf zu tragende Geräte (40), wie beispielsweise optische Sehhilfen od.dgl. oder Schutzvorrichtungen, mit einem bügelförmigen Grundkörper (2), der mehrere, am Kopf eines Benützers anlegbare Stützelemente (10) trägt, wobei Stützelemente (10) im Bereich beider Enden (3,5) und im Bereich der mittleren Abschnitte (4) des Bügels (2) vorgesehen sind und wobei Stützelemente (10) über Hebel (12, 14) am Bügel (2) allseitig frei schwenkbar gelagert sind, **dadurch gekennzeichnet, dass** Stützelemente (10) im Bereich des vorderen, in Gebrauchslage im Bereich der Stirn eines Benützers angeordneten Endes (3) des Bügels (2), weiters im Bereich des mittleren Abschnittes (4) des Bügels (2), der in Gebrauchslage im Bereich des Scheitels des Kopfes eines Benützeres angeordnet ist, und im Bereich des hinteren Endes (5) des Bügels (2), der in der Gebrauchslage im Bereich des Hinterkopfes eines Benützers angeordnet ist, vorgesehen sind, dass die Stützelemente (10) im Bereich des hinteren Endes (5) des Bügels (2) an einem Schlitten (22) angeordnet sind, der entlang des hinteren Endes (5) des Bügels (2) in Längsrichtung des Bügels (2) verschiebbar ist, und dass zum Verstellen des Schlittens (22) eine Stellvorrichtung (24) vorgesehen ist.

2. Halter nach Anspruch 1, **dadurch gekennzeichnet, dass** Stützelemente (10) zu mehreren Gruppen (6, 7, 8) aus zwei oder mehreren Stützelementen (10) zusammengefasst sind.

3. Halter nach Anspruch 1 oder 2, **dadurch gekennzeichnet, dass** die Schwenkbarkeit der Stützelemente (10) begrenzt oder begrenzbar ist.

4. Halter nach einem der Ansprüche 1 bis 3, **dadurch gekennzeichnet, dass** die Stützelemente (10) verschwenkbar an Hebeln (12) gelagert sind.

5. Halter nach Anspruch 4, **dadurch gekennzeichnet, dass** die Hebel (12) ihrerseits über Grundhebel (14) am Bügel (2) verschwenkbar gelagert sind.

6. Halter nach einem der Ansprüche 1 bis 5, **dadurch gekennzeichnet, dass** die Stützelemente (10) am Kopf des Benutzers anzulegende Kissen aufweisen.

7. Halter nach Anspruch 6, **dadurch gekennzeichnet, dass** die Kissen mit Unterdruck beaufschlagbar sind.

8. Halter nach einem der Ansprüche 1 bis 7, **dadurch gekennzeichnet, dass** die Stellvorrichtung für den Schlitten (22) eine Stellschraube (24) ist.

9. Halter nach einem der Ansprüche 1 bis 8, **dadurch gekennzeichnet, dass** am Schlitten (22) ein Gehäuse (30) mit einem Aufnahmeraum für Elektronikbauteile u.dgl. und/oder Gegengewichte vorgesehen ist.

10. Halter nach einem der Ansprüche 1 bis 9, **dadurch gekennzeichnet, dass** am Schlitten (22) und/oder am Bügel (2) wenigstens eine Anschlussstelle für Übertragungselemente, z.B. Steckdosen oder Infrarotfenster ("infrarot-ports"), Steckbuchse für den Anschluss von Leitungen, wie Energieversorgungsleitungen, Datenleitungen, Steuerleitungen u.dgl., vorgesehen ist.

11. Halter nach einem der Ansprüche 1 bis 10, **dadurch gekennzeichnet, dass** das hintere Ende (5) des Bügels (2) gerade ausgebildet ist.

12. Halter nach einem der Ansprüche 1 bis 10, **dadurch gekennzeichnet, dass** das hintere Ende (5) des Bügels (2) gebogen ausgebildet ist.

13. Halter nach einem der Ansprüche 1 bis 12, **dadurch gekennzeichnet, dass** der mittlere Abschnitt (4) des Bügels (2) gerade ausgebildet ist.

14. Halter nach einem der Ansprüche 1 bis 12, **dadurch gekennzeichnet, dass** der mittlere Abschnitt (4) des Bügels (2) gebogen ausgebildet ist.

15. Halter nach einem der Ansprüche 1 bis 14, **dadurch gekennzeichnet, dass** die im mittleren Abschnitt (4) des Bügels (2) angeordneten Stützelemente (10) in wenigstens zwei, vorzugsweise parallel zum Bügel (2) verlaufenden, Reihen angeordnet sind.

16. Halter nach einem der Ansprüche 1 bis 15, **dadurch gekennzeichnet, dass** die Stützelemente (10) von einem Schlitten (20) getragen sind, der im mittleren Abschnitt (4) des Bügels (2) verschiebbar angeordnet ist.

17. Halter nach einem der Ansprüche 1 bis 16, **dadurch gekennzeichnet, dass** die Stützelemente (10) am vorderen Ende des Bügels (3) in einer quer zum Bügel (2) ausgerichteten Reihe angeordnet sind.

18. Halter nach einem der Ansprüche 1 bis 17, **dadurch gekennzeichnet, dass** die Stützelemente (10) am hinteren Ende (5) des Bügels (2) in einer quer zum Bügel (2) ausgerichteten Reihe angeordnet sind.

19. Halter nach einem der Ansprüche 1 bis 18, **dadurch gekennzeichnet, dass** am vorderen Ende (3) des Bügels (2) eine Anschlussstelle (50) für wenigstens ein am Halter (1) zu befestigendes Gerät (40) vorgesehen ist.

20. Halter nach Anspruch 19, **dadurch gekennzeichnet, dass** dem Anschluss (50) für ein am Halter (1) zu befestigendes Gerät (40) ein Schwenkantrieb zugeordnet ist.

21. Halter nach Anspruch 20, **dadurch gekennzeichnet, dass** ein an der Anschlussstelle (50) befestigtes Gerät (40) durch den Schwenkantrieb, ausgehend von einer vorgegebenen, gegebenenfalls einstellbaren, Grundstellung, verstellbar ist.

22. Halter nach einem der Ansprüche 1 bis 21, **dadurch gekennzeich** **net, dass** der Bügel (2) hohl ausgebildet ist.

23. Halter nach einem der Ansprüche 1 bis 22, **dadurch gekennzeichnet, dass** am Bügel (2) eine Nut (26) vorgesehen ist.

24. Halter nach Anspruch 23, **dadurch gekennzeichnet, dass** die Nut (26) im Bereich des mittleren Abschnittes (4) des Bügels (2) vorgesehen ist.

25. Halter nach einem der Ansprüche 1 bis 24, **dadurch gekennzeichnet, dass** dieser mit wenigstens einem, am Kopf des Trägers anliegenden Sensor ausgerüstet ist, der physiologische Messwerte und Stromimpulse des Trägers übernimmt.

26. Halter nach Anspruch 25, **dadurch gekennzeichnet, dass** wenigstens eines der Stützelemente (10) als Sensor ausgebildet ist.

27. Halter nach einem der Ansprüche 1 bis 26, **dadurch gekennzeichnet, dass** am Bügel (2) wenigstens ein Gehäuse (30) mit einem Aufnahmeraum für Elektronikbauteile u.dgl. vorgesehen ist.

## Claims

1. Support (1) for devices (40) which are to be worn on the head, such as for example optical vision aids or the like or protective devices, with a bow-shaped base body (2) which bears several support elements (10) which can be placed against the head of the user, there being support elements (10) in the area of the two ends (3, 5) and in the area of the middle sections (4) of the bow (2), and support elements (10) being supported to be able to swivel freely to all sides on the bow (2) via levers (12, 14), **characterized in that** there are support elements (10) in the area of the front end (3) of the bow (2), which end is located in the position of use in the area of the forehead of the user, further in the area of the middle section (4) of the bow (2) which is located in the position of use in the area of the crown of the head of the user, and in the area of the back end (5) of the bow (2) which is located in the position of use in the area of the back of the head of the user, that the support elements (10) in the area of the back end (5) of the bow (2) are located on a carriage (22), which can be moved along the back end (5) of the bow (2) and that for moving the carriage (22) an actuating device (24) is provided.

2. Support as claimed in claim 1, **characterized in that** support elements (10) are combined into several groups (6, 7, 8) of two or more support elements (10).

3. Support as claimed in claim 1 or 2, **characterized in that** the swivelling capacity of the support elements (10) is limited or can be limited.

4. Support as claimed in one of claims 1 to 3, **characterized in that** the support elements (10) are supported to be able to swivel on the levers (12).

5. Support as claimed in claim 4, **characterized in that** the levers (12) for their part are supported to be able to swivel on the bow (2) via base levers (14).

6. Support as claimed in one of claims 1 to 5, **characterized in that** the support elements (10) have cushions which can be placed against the head of the user.

7. Support as claimed in claim 6, **characterized in that** the cushions can be supplied with negative pressure.

8. Support as claimed in one of claims 1 to 7, **characterized in that** the actuating device for the carriage (22) is a set crew (24).

9. Support as claimed in one of claims 1 to 8, **characterized in that** on the carriage (22) there is a housing (30) with a holding space for electronic components and the like and/or counterweights.

10. Support as claimed in one of claims 1 to 9, **characterized in that** on the carriage (22) and/or the bow (2) there is at least one connecting point for transmission elements, for example sockets or infrared ports, jacks for connection of lines such as power supply lines, data lines, control lines and the like.

11. Support as claimed in one of claims 1 to 10, **characterized in that** the back end (5) of the bow (2) is made straight.

12. Support as claimed in one of claims 1 to 10, **characterized in that** the back end (5) of the bow (2) is made bent.

13. Support as claimed in one of claims 1 to 12, **characterized in that** the middle section (4) of the bow (2) is made straight.

14. Support as claimed in one of claims 1 to 12, **characterized in that** the middle section (4) of the bow (2) is made bent.

15. Support as claimed in one of claims 1 to 14, **characterized in that** the support elements (10) which are located in the middle section (4) of the bow (2) are arranged in at least two rows which run preferably parallel to the bow (2).

16. Support as claimed in one of claims 1 to 15, **characterized in that** the support elements (10) are carried by a carriage (20) which is movably arranged in the middle section (4) of the bow (2).

17. Support as claimed in one of claims 1 to 16, **characterized in that** the support elements (10) are located on the front end of the bow (3) in a row which is aligned transversely to the bow (2).

18. Support as claimed in one of claims 1 to 17, **characterized in that** the support elements (10) are located on the back end (5) of the bow (2) in a row which is aligned transversely to the bow (2).

19. Support as claimed in one of claims 1 to 18, **characterized in that** on the front end (3) of the bow (2) there is a connecting point (50) for at least one device (40) which is to be attached to the support (1).

20. Support as claimed in claims 19, **characterized in that** a swivelling drive is assigned to the connection (50) for the device (40) which is to be attached to the support (1).

21. Support as claimed in claim 20, **characterized in that** a device (40) which is attached to the connecting point (50) can be moved by the swivelling drive, proceeding from a given, optionally adjustable base position.

22. Support as claimed in one of claims 1 to 21, **characterized in that** the bow (2) is made hollow.

23. Support as claimed in one of claims 1 to 22, **characterized in that** on the bow (2) there is a groove (26).

24. Support as claimed in claim 23, **characterized in that** the groove (26) is provided in the area of the middle section (4) of the bow (2).

25. Support as claimed in one of claims 1 to 24, **characterized in that** it is equipped with at least one sensor which adjoins the head of the wearer and which accepts measured physiological values and current pulses of the wearer.

26. Support as claimed in claim 25, **characterized in that** at least one of the support elements (10) is made as a sensor.

27. Support as claimed in one of claims 1 to 26, **characterized in that** on the bow (2) there is at least one housing (30) with a holding space for electronic components and the like.

## Revendications

1. Support (1) pour appareils (40) à porter sur la tête, tels que, par exemple, des appareils optiques ou similaires ou des dispositifs protecteurs, comprenant un corps de base en forme d'étrier (2) qui porte plusieurs éléments d'appui (10) venant se poser sur la tête de l'utilisateur, des éléments d'appui (10) étant prévus dans la zone des deux extrémités (3, 5) et dans la zone des sections centrales (4) de l'étrier (2), des éléments d'appui (10) étant logés sur l'étrier (2) de manière librement orientable de tous les côtés au moyen de leviers (12, 14), **caractérisé en ce que** des éléments d'appui (10) sont prévus dans la zone de l'extrémité avant (3) de l'étrier (2) située au niveau du front d'un utilisateur, ainsi que dans la zone de la section centrale (4) de l'étrier (2) située, en position d'utilisation, au niveau du sommet de la tête d'un utilisateur, ainsi que dans la zone de l'extrémité arrière (5) de l'étrier (2) située, en position d'utilisation, au niveau de l'arrière de la tête d'un utilisateur, **en ce qu'**au niveau de l'extrémité arrière (5) de l'étrier (2), les éléments d'appui (10) sont disposés sur un glissoir (22) déplaçable le long de l'extrémité arrière (5) de l'étrier (2) dans la direction longitudinale de celui-ci, et **en ce qu'**un dispositif de réglage (24) est prévu pour le réglage du glissoir (22).

2. Support selon la revendication 1, **caractérisé en ce que** des éléments d'appui (10) sont réunis en plusieurs groupes (6, 7, 8) composés de deux éléments d'appui (10) ou plus.

3. Support selon la revendication 1 ou 2, **caractérisé en ce que** l'orientabilité des éléments d'appui (10) est ou peut être limitée.

4. Support selon l'une des revendications 1 à 3, **caractérisé en ce que** les éléments d'appui (10) sont logés orientables sur des leviers (12).

5. Support selon la revendication 4, **caractérisé en ce que**, de leur côté, les leviers (12) sont logés orientables sur l'étrier (2) par l'intermédiaire de leviers de base (14).

6. Support selon l'une des revendications 1 à 5, **caractérisé en ce que** les éléments d'appui (10) présentent des coussins qui viennent se poser sur la tête de l'utilisateur.

7. Support selon la revendication 6, **caractérisé en ce que** les coussins peuvent être mis sous vide partiel.

8. Support selon l'une des revendications 1 à 7, **caractérisé en ce que** le dispositif de réglage pour le glissoir (22) est une vis de réglage (24).

9. Support selon l'une des revendications 1 à 8, **caractérisé en ce qu'**un boîtier (30) avec un espace pouvant recevoir des composants électroniques ou similaires et/ou des contrepoids, est prévu sur le glissoir (22).

10. Support selon l'une des revendications 1 à 9, **caractérisé en ce qu'**au moins une borne de raccordement pour des éléments de transmission, par exemple, des prises de courant ou des ports infrarouges, une fiche femelle pour le raccordement de lignes, telles que des lignes d'alimentation en énergie, des lignes de données, des lignes de commande et similaires, est prévue sur le glissoir (22) et/ou sur l'étrier (2).

11. Support selon l'une des revendications 1 à 10, **caractérisé en ce que** l'extrémité arrière (5) de l'étrier (2) est conçue droite.

12. Support selon l'une des revendications 1 à 10, **caractérisé en ce que** l'extrémité arrière (5) de l'étrier (2) est conçue courbée.

13. Support selon l'une des revendications 1 à 12, **caractérisé en ce que** la section centrale (4) de l'étrier (2) est conçue droite.

14. Support selon l'une des revendications 1 à 12, **caractérisé en ce que** la section centrale (4) de l'étrier (2) est conçue courbée.

15. Support selon l'une des revendications 1 à 14, **caractérisé en ce que** les éléments d'appui (10) disposés dans la section centrale (4) de l'étrier (2) sont positionnés en deux rangées au moins s'étendant de préférence parallèlement à l'étrier (2).

16. Support selon l'une des revendications 1 à 15, **caractérisé en ce que** les éléments d'appui (10) sont portés par un glissoir (20) qui est disposé déplaçable dans la section centrale (4) de l'étrier (2).

17. Support selon l'une des revendications 1 à 16, **caractérisé en ce que** les éléments d'appui (10) au niveau de l'extrémité avant de l'étrier (3) sont disposés dans une rangée orientée transversalement à l'étrier (2).

18. Support selon l'une des revendications 1 à 17, **caractérisé en ce que** les éléments d'appui (10) au niveau de l'extrémité arrière (5) sont disposés dans une rangée orientée transversalement à l'étrier (2).

19. Support selon l'une des revendications 1 à 18, **caractérisé en ce qu'**au moins une borne de raccordement (50) pour un appareil (40) à fixer sur le support (1) est prévue à l'extrémité avant (3) de l'étrier (2).

20. Support selon la revendication 19, **caractérisé en ce qu'**un mécanisme d'orientation (50) pour un appareil (40) à fixer sur le support (1) est associé au raccordement (50).

21. Support selon la revendication 20, **caractérisé en ce qu'**un appareil (40) fixé sur la borne de raccordement (50) est réglable par l'intermédiaire du mécanisme d'orientation à partir d'une position de base prédéterminée, le cas échéant réglable.

22. Support selon l'une des revendications 1 à 21, **caractérisé en ce que** l'étrier (2) est conçu creux.

23. Support selon l'une des revendications 1 à 22, **caractérisé en ce qu'**une rainure (26) est prévue sur l'étrier (2).

24. Support selon la revendication 23, **caractérisé en ce que** la rainure (26) est prévue dans la zone de la section centrale (4) de l'étrier (2).

25. Support selon l'une des revendications 1 à 24, **caractérisé en ce qu'**il est équipé d'un capteur au moins venant se poser sur la tête de l'utilisateur, qui réceptionne des valeurs de mesure physiologiques et des impulsions de courant du porteur.

26. Support selon la revendication 25, **caractérisé en ce qu'**un élément d'appui (10) au moins est conçu comme capteur.

27. Support selon l'une des revendications 1 à 26, **caractérisé en ce qu'**un boîtier (30) au moins avec un espace recevant des composants électroniques et similaires est prévu sur I'étrier (2).
